# FASCICULE DE BREVET EUROPEEN

(11) **EP 0 815 786 B1**
(45) Date de publication et mention de la délivrance du brevet: **18.07.2001**
(21) Numéro de dépôt: 97401335.1
(22) Date de dépôt: 13.06.1997
(51) Int. Cl.: A47J 37/12

(54) **Friteuse électrique**
Elektrisches Fritiergerät
Electric fryer

(30) Priorité: 27.06.1996 FR 9607983
(43) Date de publication de la demande: 07.01.1998
(73) Titulaire: MOULINEX S.A., 14123 Cormelles Le Royal (FR)
(72) Inventeur: Baillieul, Philippe Louis Robert, 14280 Saint Germain La Blanche Herbe (FR)
(74) Mandataire: Busquets, Jean-Pierre

(56) Documents cités:
- WO-A-96/05761
- CH-A- 598 794
- DE-A- 3 619 762
- US-A- 3 919 523
- US-A- 4 217 482

## Description

La présente invention se rapporte aux friteuses ménagères du type comportant, dans un boîtier, une cuve susceptible de contenir un bain de cuisson, une résistance électrique chauffante pour le chauffage du bain de cuisson, des moyens de régulation thermique à forte inertie thermique, montés en série avec la résistance chauffante et fonctionnant dans une plage de température de commutation prédéterminée, et un interrupteur thermostatique de sécurité monté en série avec la résistance électrique chauffante et fonctionnant à une température de commutation fixée supérieure à la température maximale de ladite plage. Une telle friteuse est décrite dans le document US-A-3 919 523.

Pour les friteuses du type précédent, il est connu d'effectuer une régulation de la température du bain en mesurant, non pas directement la température réelle du bain de cuisson, mais une température image prise sur le fond extérieur de la cuve. La régulation en température s'effectue classiquement au moyen d'un interrupteur thermostatique réglable qui ouvre le circuit d'alimentation de la résistance chauffante lorsque la température image mesurée dépasse la température de commutation de l'interrupteur. Compte tenu du fait que la résistance électrique de chauffage est placée en regard du fond de la cuve, la température du fond de cuve peut être bien supérieure à la température réelle du bain de cuisson, notamment au début du cycle de chauffage du bain de cuisson. Pour éviter que l'interrupteur thermostatique de régulation ne coupe trop souvent l'alimentation de la résistance de chauffage, ce qui conduirait à une augmentation de la durée de chauffage du bain de cuisson, il est connu d'associer à l'interrupteur thermostatique de régulation un capteur de température qui vient en contact avec le fond de la cuve, et qui transmet l'information de la température à l'interrupteur thermostatique via un transducteur.

Cette association permet d'avoir des moyens de régulation à forte inertie thermique de manière à ce que la température image reflète au mieux la température du bain de cuisson pendant le cycle de montée en température.

Un inconvénient de ce type de friteuses réside dans le fait que les moyens de régulation thermique tels que décrits précédemment ne fonctionnent de manière satisfaisante que pour une quantité normale de bain de cuisson.

Or, il peut arriver que l'utilisateur omette de placer de l'huile ou un pain de graisse dans la cuve, ou encore que la quantité d'huile dans la cuve ne soit pas suffisante. Dans de telles situations, il risque d'y avoir surchauffe, soit du revêtement de la cuve, soit du bain de cuisson, avant même que les moyens de régulation, à forte inertie thermique, n'aient le temps de réagir en coupant l'alimentation de la résistance électrique de chauffage.

Il est connu par ailleurs de prévoir, en série dans le circuit d'alimentation de la résistance électrique chauffante, un fusible thermique de sécurité placé contre le fond externe de la cuve, qui vient pallier l'inaction de l'interrupteur thermostatique en cas de détérioration ou de mauvais fonctionnement de ce dernier. En cas de surchauffe rapide de la cuve, la fusion du fusible thermique permet la mise hors circuit de la résistance électrique chauffante. La fusion du fusible assure certes la sécurité de l'utilisateur, mais rend la friteuse inutilisable jusqu'à l'intervention d'un réparateur.

La présente invention a pour objet une friteuse ménagère ne présentant pas les inconvénients précités.

Selon l'invention, une friteuse ménagère du type décrit précédemment, est plus particulièrement caractérisée en ce que l'interrupteur thermostatique de sécurité possède une inertie thermique moindre que celle des moyens de régulation de façon à couper l'alimentation de la résistance électrique chauffante en cas d'absence du bain de cuisson ou en cas de présence insuffisante du bain de cuisson dans la cuve.

Les revendications dépendantes spécifient des modes de réalisation avantageux de la friteuse faisant l'objet de la revendication indépendante.

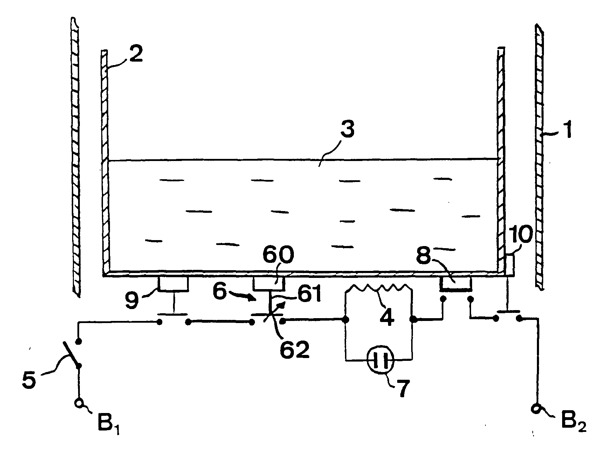

L'invention ainsi que les différents avantages qu'elle procure seront mieux compris au vu de la description suivante faite en référence à la figure unique annexée.

Sur la figure, on a représenté schématiquement une vue partielle en coupe d'une friteuse selon un mode de réalisation préférentiel de l'invention, ainsi que les liaisons électriques de certains éléments constitutifs de la friteuse.

La friteuse schématisée comporte classiquement un boîtier 1 à l'intérieur duquel se trouve une cuve 2 susceptible de recevoir un bain de cuisson 3 constitué soit par de l'huile, soit par la graisse provenant de la fusion d'un bloc de graisse.

Le chauffage du bain de cuisson est réalisé par l'intermédiaire d'une résistance électrique chauffante 4 placée sous la cuve 2. Comme on le voit sur le schéma électrique, la résistance électrique 4 est connectée en série avec un interrupteur général 5 actionné par l'utilisateur, et des moyens de régulation thermique 6, entre les bornes B1 et B2 du réseau d'alimentation. Un voyant de contrôle 7 monté en parallèle sur la résistance 4. permet d'avertir l'utilisateur que la résistance est sous tension. Les moyens de régulation thermique 6 sont constitués en sorte de présenter une forte inertie thermique. Ils comportent à cet effet un capteur thermique 60 placé directement en contact avec le fond de la cuve et relié à un interrupteur thermostatique, par exemple de type bilame 62, par l'intermédiaire d'un transducteur 61. L'interrupteur thermostatique 62 est réglable dans une plage de températures de commutation prédéterminée de l'ordre de 110°C à 140°C, de manière à permettre à l'utilisateur de sélectionner la température du bain de cuisson sur une plage de température donnée, typiquement de 160°C à 190°C, pour une charge normale du bain de cuisson, typiquement de l'ordre de 2 litres à 2,2 litres. Un fusible thermique 10 en contact avec la cuve 2 est de préférence prévu pour couper l'alimentation en cas de surchauffe.

Selon une caractéristique essentielle de l'invention, la friteuse comporte en outre un interrupteur thermostatique 8, dit de sécurité, monté en série avec la résistance électrique chauffante 4, et fonctionnant à une température de commutation fixée supérieure à la température maximale de la plage de température de commutation pour l'interrupteur thermostatique réglable 6, par exemple de l'ordre de 180°C. Selon l'invention, l'interrupteur de sécurité présente une inertie thermique moindre que celle de l'interrupteur de régulation 6, de façon à détecter les élévations anormalement rapides de la température.

Dans un mode de réalisation préférentiel, l'interrupteur thermostatique de sécurité est de type bilame, placé directement en contact avec le fond externe de la cuve.

Pour mettre en marche la friteuse, l'utilisateur sélectionne la température du bain de cuisson en agissant sur l'interrupteur thermostatique de régulation 62, et met l'appareil sous tension en fermant l'interrupteur général 5. L'interrupteur de régulation 62 et l'interrupteur de sécurité 8 sont tous les deux en position fermée, de sorte que la résistance électrique va pouvoir commencer à chauffer.

Si le bain de cuisson 3 correspond à une charge normale, la température du bain de cuisson va augmenter lentement jusqu'à la température sélectionnée par l'utilisateur. Le réglage et la forte inertie thermique des moyens de régulation 6 permettent d'optimiser la durée du chauffage en évitant qu'une coupure de l'alimentation n'intervienne pendant la phase de montée en température. Pendant la phase de cuisson, le thermostat 62 joue son rôle de régulateur de température en passant alternativement d'une position ouverte à une position fermée. Dans ce cas d'utilisation normale, l'interrupteur de sécurité 8 est inopérant.

En revanche, en l'absence de bain de cuisson dans la cuve, la température de la cuve va monter très rapidement. Les essais de la Demanderesse ont montré que la coupure de l'interrupteur de sécurité 8 intervenait après environ 2 minutes et 30 secondes de fonctionnement, durée au bout de laquelle la température de la cuve reste inférieure à 300°C, ce qui permet de protéger le revêtement anti-adhésif de la cuve.

Des tests comparatifs ont montré que l'utilisation seule de l'interrupteur de régulation 62 ne ferait intervenir la coupure qu'au bout de 3 minutes et 30 secondes, la température de la cuve étant alors supérieure à 300°C.

Par ailleurs, si le bain de cuisson présent dans la cuve est insuffisant, correspondant par exemple à un niveau d'un centimètre au-dessus du fond de la cuve, l'augmentation de température va également être très rapide. La faible inertie thermique de l'interrupteur de sécurité va lui permettre d'intervenir en premier et de couper l'alimentation de la résistance chauffante 4. Les essais de la Demanderesse ont montré que la coupure intervenait en sorte que la température du bain de cuisson ne dépasse pas 280°C. Ce dernier ne risque donc pas de s'enflammer.

Dans un mode de réalisation particulièrement avantageux de l'invention, la cuve 2 est amovible. Dans ce cas, la friteuse comporte de préférence un détecteur de présence de cuve 9 qui fonctionne comme un interrupteur en série dans le circuit d'alimentation de la résistance électrique 4, comme on le voit sur le schéma électrique. Il peut arriver que la cuve soit mal positionnée dans le boîtier 1 et présente un mauvais appui sur la résistance 4, tout en établissant le contact avec le détecteur de présence 8. Pour remédier à cette situation, l'interrupteur thermostatique de sécurité 8 est placé à proximité de la résistance électrique chauffante. Cette position lui permet ainsi de détecter rapidement le surplus de rayonnement de la résistance chauffante 4, et d'interrompre l'alimentation.

Outre les interventions prioritaires de l'interrupteur de sécurité 8 en cas d'augmentation anormalement rapide de la température, cet interrupteur 8 prend avantageusement le relais de l'interrupteur de régulation 62 en cas de dysfonctionnement de ce dernier, ce qui permet d'éviter toute surchauffe de l'huile sans nécessiter la fusion du fusible thermique 10. Ce dernier devient donc une sécurité ultime, réglée par exemple à environ 182°C.

En pratique, on pourra utiliser par exemple le thermostat du type 261, commercialisé par la Société EL-TH, comme thermostat de sécurité, et le thermostat du type 141.141 commercialisé par la Société TSB, comme thermostat de régulation.

## Revendications

1. Friteuse ménagère du type comportant, dans un boîtier (1), une cuve (2) susceptible de contenir un bain de cuisson (3), une résistance électrique chauffante (4) pour le chauffage du bain de cuisson, des moyens (6) de régulation thermique à forte inertie thermique, montés en série avec la résistance chauffante et fonctionnant dans une plage de température de commutation prédéterminée, et un interrupteur thermostatique de sécurité (8) monté en série avec la résistance électrique chauffante et fonctionnant à une température de commutation fixée supérieure à la température maximale de ladite plage,
**caractérisée en ce que** l'interrupteur thermostatique de sécurité (8) possède une inertie thermique moindre que celle des moyens (6) de régulation thermique de façon à couper l'alimentation de la résistance électrique chauffante en cas d'absence du bain de cuisson ou en cas de présence insuffisante du bain de cuisson dans la cuve (2).

2. Friteuse ménagère selon la revendication 1,
**caractérisée en ce que** les moyens (6) de régulation thermique comportent un capteur de température (60) placé en contact avec le fond de la cuve et relié à un interrupteur thermostatique de régulation (62) par l'intermédiaire d'un transducteur (61).

3. Friteuse ménagère selon l'une quelconque des revendications précédentes,
**caractérisée en ce que** l'interrupteur thermostatique de sécurité (8) est placé directement en contact avec le fond de la cuve.

4. Friteuse ménagère selon l'une quelconque des revendications précédentes,
**caractérisée en ce que** la cuve (2) est amovible, et en ce que la friteuse comporte en outre un détecteur (9) de présence de cuve fonctionnant comme un interrupteur en série avec la résistance électrique chauffante (4).

5. Friteuse ménagère selon la revendication 4,
**caractérisée en ce** l'interrupteur thermostatique de sécurité (8) est placé à proximité de la résistance électrique chauffante.

6. Friteuse ménagère selon l'une quelconque des revendications 2 à 5,
**caractérisée en ce que** l'interrupteur thermostatique de régulation (62) possède une plage de températures de commutation variant sensiblement de 110°C à 140°C.

7. Friteuse ménagère selon l'une quelconque des revendications précédentes,
**caractérisée en ce que** l'interrupteur thermostatique de sécurité (8) possède une température de commutation sensiblement égale à 180°C.

## Claims

1. Domestic deep fryer of the type having, in a casing (1), a vessel (2) able to contain a cooking bath (3), an electric heating element (4) for heating the cooking bath, thermal regulation means (6) with high thermal inertia, connected in series with the heating element and functioning within a predetermined switching temperature range, and a thermostatic safety switch (8) connected in series with the electric heating element and operating at a fixed switching temperature higher than the maximum temperature of said range,
characterised in that the thermostatic safety switch (8) has a lower thermal inertia than the thermal regulation means (6) so as to cut off the power supply to the electric heating element in the event of absence of the cooking bath or in the event of insufficient cooking bath in the vessel (2).

2. Domestic deep fryer according to claim 1,
characterised in that the thermal regulation means (6) comprise a temperature sensor (60) placed in contact with the bottom of the vessel and connected to a thermostatic regulating g switch (62) by means of a transducer (61).

3. Domestic deep fryer according to any one of the preceding claims,
characterised in that thermostatic safety switch (8) is placed directly in contact with the bottom of the vessel.

4. Domestic deep fryer according to any one of the preceding claims,
characterised in that the vessel (2) is removable, and in that the deep fryer also has a vessel presence detector (9) operating as a switch in series with the electric heating element (4).

5. Domestic deep fryer according to claim 4,
characterised in that thermostatic safety switch (8) is placed close to the electric heating element.

6. Domestic deep fryer according to any one of claims 2 to 5 ,
characterised in that thermostatic regulating switch (62) has a switching temperature range varying substantially from 110°C to 140°C.

7. Domestic deep fryer according to any one of the preceding claims,
characterised in that thermostatic safety switch (8) has a switching temperature of substantially 180°C.

## Patentansprüche

1. Haushaltsfritiergerät des Typs, der in einem Gehäuse (1) einen Topf (2) zur Aufnahme eines Fritierbades (3), einen elektrischen Heizwiderstand (4) zum Heizen des Fritierbades, eine Wärmeregelvorrichtung (6) mit hoher Wärmeträgheit, die in Reihe mit dem Heizwiderstand geschaltet ist und in einem vorbestimmten Bereich von Schalttemperaturen arbeitet, und einen thermostatischen Sicherheitsschalter (8) enthält, der in Reihe mit dem elektrischen Heizwiderstand geschaltet ist und bei einer festgelegten Schalttemperatur arbeitet, die höher als die maximale Temperatur des Bereiches ist, dadurch **gekennzeichnet**, daß der thermostatische Sicherheitsschalter (8) eine geringere Wärmeträgheit als die der Wärmeregelvorrichtung (6) aufweist, so daß er die Stromversorgung des elektrischen Heizwiderstandes unterbricht, falls kein Fritierbad oder falls eine ungenügende Menge des Fritierbades im Topf (2) vorhanden ist.

2. Haushaltsfritiergerät nach Anspruch, dadurch **gekennzeichnet**, daß die Wärmeregelvorrichtung (6) einen Temperaturfühler (60) aufweist, der in Berührung mit dem Boden des Topfes angeordnet und mittels eines Transducers (61) mit einem thermostatischen Regelschalter (62) verbunden ist.

3. Haushaltsfritiergerät nach einem der vorangehenden Ansprüche, dadurch **gekennzeichnet**, daß der thermostatische Sicherheitsschalter (8) in direkter Berührung mit dem Boden des Topfes angeordnet ist.

4. Haushaltsfritiergerät nach einem der vorangehenden Ansprüche, dadurch **gekennzeichnet**, daß der Topf (2) abnehmbar ist und daß das Fritiergerät außerdem einen Detektor (9) zur Feststellung der Anwesenheit des Topfes aufweist, der wie ein in Reihe mit dem elektrischen Heizwiderstand (4) liegender Schalter arbeitet.

5. Haushaltsfritiergerät nach Anspruch 4, dadurch **gekennzeichnet**, daß der thermostatische Sicherheitsschalter (8) in der Nähe des elektrischen Heizwiderstandes angeordnet ist.

6. Haushaltsfritiergerät nach einem der Ansprüche 2 bis 5, dadurch **gekennzeichnet**, daß der thermostatische Regelschalter (62) einen Schalttemperaturbereich aufweist, der im Wesentlichen zwischen 110° C und 140° C liegt.

7. Haushaltsfritiergerät nach einem der vorangehenden Ansprüche, dadurch **gekennzeichnet**, daß der thermostatische Sicherheitsschalter (8) eine Schalttemperatur im Wesentlichen gleich 180° C aufweist.
